Europäisches Patentamt

(19) European Patent Office (11) Publication number: **0 055 623**

Office européen des brevets **B1**

(12) **EUROPEAN PATENT SPECIFICATION**

(45) Date of publication of patent specification: **14.08.85** (51) Int. Cl.⁴: **G 06 F 13/28**

(21) Application number: **81306150.4**

(22) Date of filing: **24.12.81**

(54) Direct memory-access mode for a high-speed memory system.

(30) Priority: **29.12.80 JP 187901/80**

(43) Date of publication of application:
**07.07.82 Bulletin 82/27**

(45) Publication of the grant of the patent:
**14.08.85 Bulletin 85/33**

(84) Designated Contracting States:
**DE FR GB SE**

(56) References cited:
**EP-A-0 009 678**
**US-A-4 181 938**

**IBM TECHNICAL DISCLOSURE BULLETIN, vol.
20, no. 10, march 1978, NEW YORK (US), TSUI:
"Cycle squeeze principle of operation in
processor systems", pages 4230-4234
ELECTRONIC DESIGN, vol. 28, no. 20,
september 1980, ROCHELLE PARK (US),
McMURRAY: "Transfer processor simplifies
direct-memory-access control", pages 117-125**

(73) Proprietor: **FUJITSU LIMITED
1015, Kamikodanaka Nakahara-ku
Kawasaki-shi Kanagawa 211 (JP)**

(72) Inventor: **Kurosu, Hirohiko
8-3-2-519, Okusawa Setagaya-ku
Tokyo 158 (JP)**
Inventor: **Nagata, Satoshi
5-567, Hanakoganei Kodaira-shi
Tokyo 187 (JP)**
Inventor: **Satake, Yasuo
2-3-9-702, Nijigaoka Tama-ku Kawasaki-shi
Kanagawa 275 (JP)**

(74) Representative: **Sunderland, James Harry et al
HASELTINE LAKE & CO Hazlitt House 28
Southampton Buildings Chancery Lane
London WC2A 1AT (GB)**

## Description

The present invention relates to a memory system.

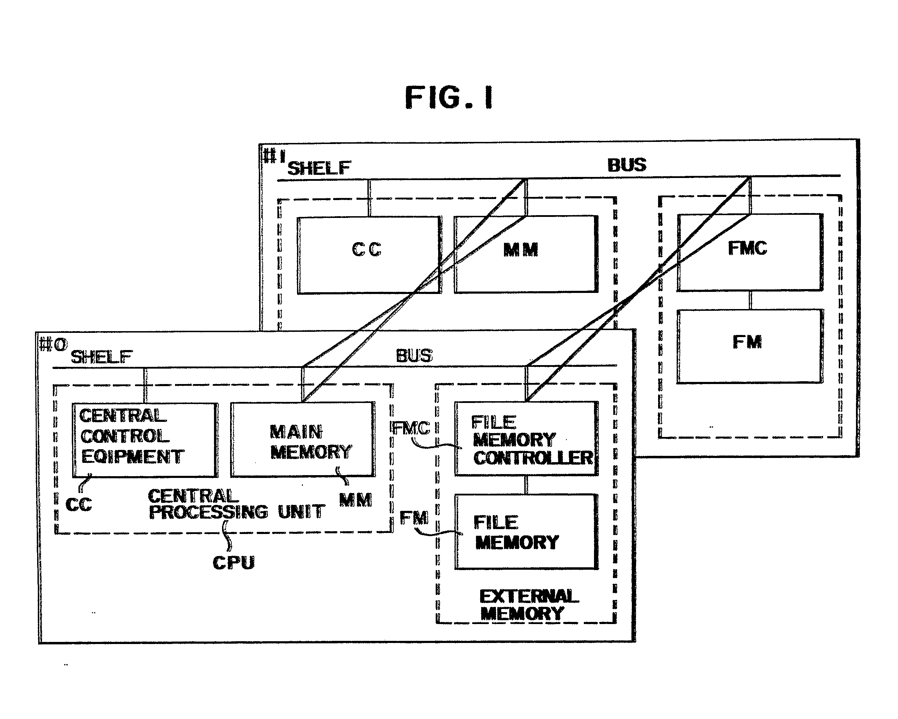

Fig. 1 is a schematic block diagram illustrating an example of the arrangement of an external memory system of a kind with which the invention is concerned. In Fig. 1, each central processing unit CPU comprises central control equipment cc and a main memory MM, which are interconnected via a bus and also connected via a bus to an external memory system EXTERNAL MEMORY. The external memory system comprises a file memory FM and a file memory controller FMC. In Fig. 1, the main memories MM and the external memory systems on shelves 0 and 1 are respectively interconnected via buses, constituting a duplex system.

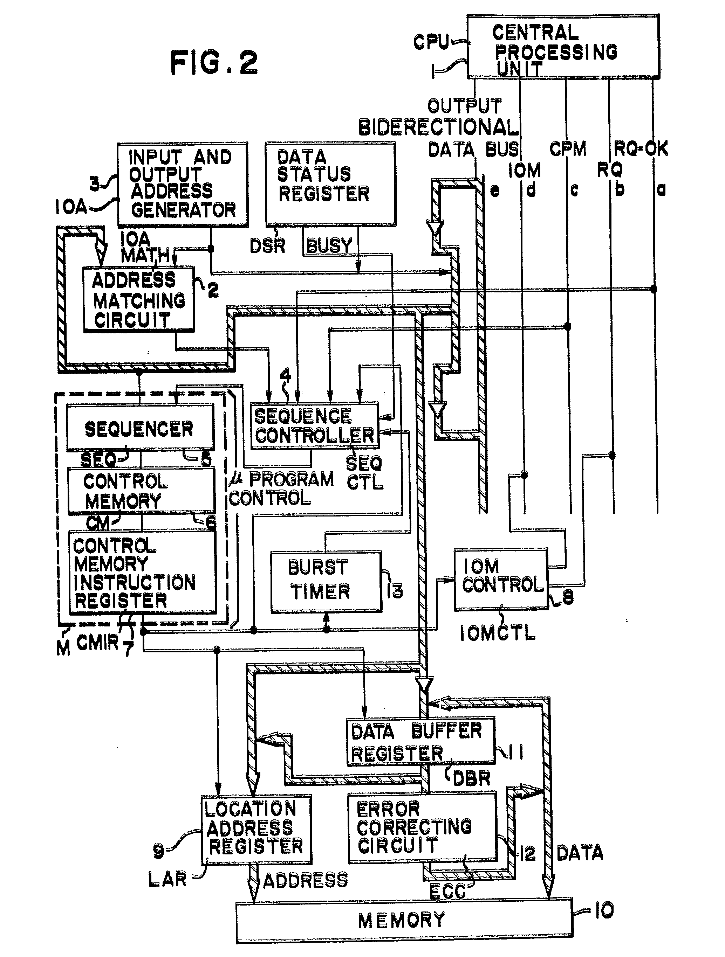

A conventional external memory system, of the type which is controlled by a microprogram, has an arrangement as shown in Fig. 2, which is a schematic block diagram.

A description will now be given of its operation in program mode and direct memory access (hereinafter referred as DMA) mode.

Starting of the external memory system in the program mode will first be described.

When supplied with a selected address of the external memory system via an input data bus e from a central processing unit (hereinafter referred to as the CPU) 1, an input and output address matching circuit (IOA math) 2 compares the address with an address of the external memory system input to an input and output address generator 3 and, in the case of coincidence, provides a start signal to a sequence controller (SEQ CTL) 4. Then the sequence controller 4 applies a control signal to a microprogram control unit M which comprises a sequencer (SEQ) 5, a control memory unit (CM) 6 and a control memory instruction register (CMIR) 7. The sequencer 5 responds to the control signal from the sequence controller 4 to sequentially deliver control information from the control memory unit 6 to the control memory instruction register 7. The control memory instruction register 7 has the function of storing and executing the control information from the control memory unit 6. When starting the microprogram, the control memory instruction register 7 reports the acceptance of the access to the CPU 1 via an IOM (Input and Output Mode) control unit 8 and an IOM signal line d. Recognizing the acceptance of the access, the CPU 1 sends via a CPM (Central Processor Mode) signal line c to the sequence controller 4 an order specifying execution of access to the external memory system. Then the sequence controller 4 restarts the sequencer 5. When this order is decided by the microprogram control unit M to be normal, the decision result is provided from the control memory instruction register 7 via the IOM control unit 8 to the CPU 1 to inform it of the acceptance of the order. The microprogram control unit M starts an operation in accordance with the order from the CPU 1. If this order is, for example, a one word readout order, address information which is read into a location address register (LAR) 9 is set up by the microprogram control unit M from the data bus and the microprogram control unit M provides the address information to a memory 10. Data read out from the memory 10 based on the address information is provided to a data buffer register (DBR) 11. The data thus set in the data buffer register 11 is checked by an error correcting circuit (ECC) 12 and set again in the data buffer memory 11. The microprogram control unit M applies data sending information via the IOM control 8 to the CPU 1 and instructs the data buffer register 11 to send out the data therefrom to the CPU 1 via an output data bus e. The CPU 1 provides via the CPM signal line c to the sequence controller 4 information indicating that it has received the data. Upon reception of this signal by the microprogram control unit M, the one word readout operation in the program mode comes to an end.

In a case in which the external memory system receives a DMA order while in the execution of the program mode, the program mode is brought to an end by applying information indicating the reception of the order to the CPU 1 via the CPM signal line c and the external memory system independently executes an operation in accordance with the DMA order.

Next, in the event that the order given is an order for DMA transfer, a request for transfer is sent from the microprogram control unit M to the CPU 1 via the IOM control unit 8 and an RQ (Request) signal line b. When the CPU 1 becomes ready to receive the request, a request-OK signal is sent back via an RQ-OK (Request-OK) signal line a, starting DMA transfer. In this case, the data transfer from the memory 10 is the same as in the program mode.

If the quantity of data to be transferred is large and the CPU 1 is occupied continuously throughout this transfer, CPU processing is stopped for a long period of time.

To avoid this, the data is transferred in steps, each step involving transfer of several units of data under the control of the microprogram control unit M, and a burst timer 13 is activated after each transfer step to provide burst timing of the microprogram itself, stopping the transfer operation until it is restarted by the burst timer 13. During a time when the DMA transfer is stopped, the CPU 1 executes other processing. Upon completion of the burst timing, i.e. at the end of a time when DMA transfer is stopped the microprogram control unit M is started by the burst timer 13 to again send a request for the DMA transfer to the CPU 1 and the external memory system resumes DMA transfer under the control of the microprogram. This operation is repeated until a required quantity of data has all been transferred.

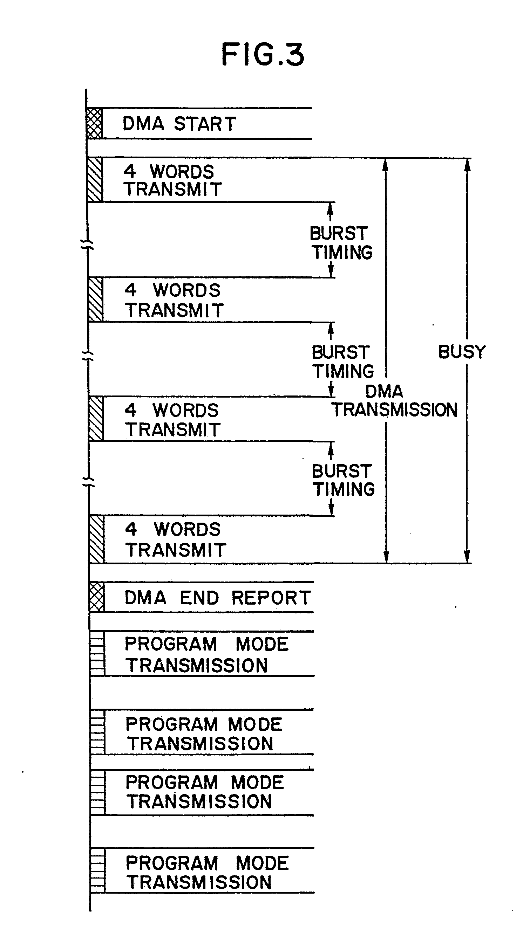

Fig. 3 is a time chart explanatory of data transfer in the conventional external memory system shown in Fig. 2.

When performing DMA transfer, operation is started by an instruction from the CPU 1 to effect DMA transfer in accordance with an address loaded in the location address register 9. Fig. 3 shows a case where the DMA transfer is effected in steps of four words and burst timing is provided in the intervals between the respective DMA transfer operation steps.

Throughout the DMA transfer, including the burst timing, the location address register 9 remains busy and if a request for the program mode data transfer occurs, the external memory system cannot accept the request.

Upon completion of DMA transfer of a required quantity of data, a DMA transfer end report is provided to the CPU 1, by which the location address register 9 is released from its busy state, making the external memory system available for receiving an address relating to program mode transfer.

To execute program mode transfer, an address specified by the program mode is loaded in the location address register 9 and the program mode transfer is accomplished in accordance with the specified address.

Reference is made to an article by F. Tsui, entitled ""CYCLE SQUEEZE" PRINCIPLE OF OPERATION IN PROCESSOR SYSTEMS", IBM Technical Disclosure Bulletin, Vol. 20, No. 10, March 1978.

In that article it is explained that the "cycle steal" mode of operation allows an I/O device to "steal" a machine cycle, during which computing activity in a processing unit will be stopped and the I/O device given access to memory.

It is stated that, as an alternative to "cycle steal", the use of a special memory construction allowing simultaneous double addressing is known, but that this alternative is not attractive because it requires duplucation of accessing circuitry.

The article then describes "cycle squeeze", which is intended to go a step further than "cycle steal". In "cycle squeeze", transfer of data between an I/O device and the data store in the processor is allowed to take place *simultaneously* with the computing activity in the processor, so long as that activity does not require an access to the data store. Thus, the I/O device can be permitted to "squeeze-in" during a cycle in which the data store is not being used by the processor itself.

US—A—4 181 938 discloses a processor device in which a direct memory access control (DMAC) circuit for effecting direct memory access (DMA) transfer between an I/O device and main memory, and a selection circuit for selecting a program mode or DMA mode, are integrated in the same chip as the processor unit. The processor unit includes a DMAC circuit exclusively utilizing a common memory bus timewise to permit execution of DMA mode to access a memory device, a CPU circuit exclusively utilising the common bus timewise to permit operation of a program mode for accessing a program stored in main memory, and a microprogram controller between the DMAC circuit and the CPU circuit for controlling operations between those circuits. The DMAC circuit has a bus controller for effecting changeover between DMA mode and program mode relative to exclusive use of the common memory bus, an address stepping counter and a register, connected to the counter, for storing DMA address data. The CPU circuit has, inter alia, a register group supplied with main memory address data for program mode operation. The cycle-steal technique is used.

By integration of the DMAC circuit and the selection circuit on the processor unit chip, delay between the end of DMA data transfer and commencement of program mode data transfer can be reduced, but program mode access to external memory is not possible during DMA access.

As described above, neither in the conventional system of Fig. 2, nor in the Tsui system nor in that of US—A—4 181 938, can a read/write operation of external memory in program mode be performed during DMA transfer, i.e. such operation cannot be performed until after DMA transfer is complete, even though other processing may be executed by the CPU during burst timing in the case of Fig. 2. In other words, those systems are incapable of carrying out a read/write operation in the program mode whilst in operation in DMA mode, and hence it has defect that the processing time is increased.

According to the present invention there is provided a memory system, connected to a central processing unit which includes a main memory, which system has a program mode in which read/write operations in respect of a system memory of the memory system are controlled by the central processing unit, and a direct memory access mode for direct transfer between the system memory and the main memory, the memory system comprising
   a microprogram control unit;
   timing means, operatively connected to the microprogram control unit for indicating burst timings during operation of the system in the direct memory access mode, at which timings the central processing unit can execute processing;
   location address register means, operatively connected to the microprogram control unit, the central processing unit, and the system memory, for storing address information for accessing the system memory in the direct memory access mode and in the program control mode;
   characterised in that the location address register means comprise:—
   a first location address register, operatively connected to the microprogram control unit, the central processing unit and the system memory, for storing address information for accessing the system memory in the direct memory access mode; and
   a second location address register, operatively connected to the microprogram control unit, the central processing unit and the system memory, for storing address information for accessing the system memory, operable during such burst timings for read/write operation of the system memory under control of the microprogram control unit (m) in response to a request from the central processing unit, whereby program mode access to the system memory can be effected during execution of a direct memory access mode.

An embodiment of the present invention can provide a high-speed external memory system which can be restarted by a CPU in program mode during burst timing of DMA processing. Memory of the external memory system is addressed by location address registers provided respectively for the DMA mode and the program mode, whereby data can be read out from or written in the memory in the program mode during burst timing while data transfer is being executed in the DMA mode, permitting high-efficiency processing of the external memory system.

Briefly stated, an embodiment of the present invention provides an external memory system, which operates under microprogram control with first and second location address registers, the external memory of the system being addressed by the first location address memory in the DMA mode and by the second location address memory in the program mode so that the read/write operation of the memory in the program mode can be executed during burst timing while data transfer in the DMA mode is being executed.

Reference is made, by way of example, to the accompanying drawings, in which:—

Fig. 1 is a schematic block diagram illustrating an example of an arrangement of a memory system of a kind with which the present invention is concerned;

Fig. 2 is a schematic block diagram of an example of a conventional high-speed external memory system;

Fig. 3 is a time chart explanatory of data transfer in DMA and program modes in the conventional external memory system of Fig. 2;

Fig. 4 is a schematic block diagram illustrating an embodiment of the present invention;

Fig. 5 is a time chart explanatory of data transfer in DMA and program modes of the embodiment of Fig. 4; and

Fig. 6 is a schematic block diagram illustrating possible specific arrangements of a location address register for DMA mode, a location address register for the program mode and a memory control unit, in the embodiment of Fig. 4.

In the context of an arrangement as shown in Fig. 1, the present invention is concerned primarily with the configuration of a file memory controller FMC.

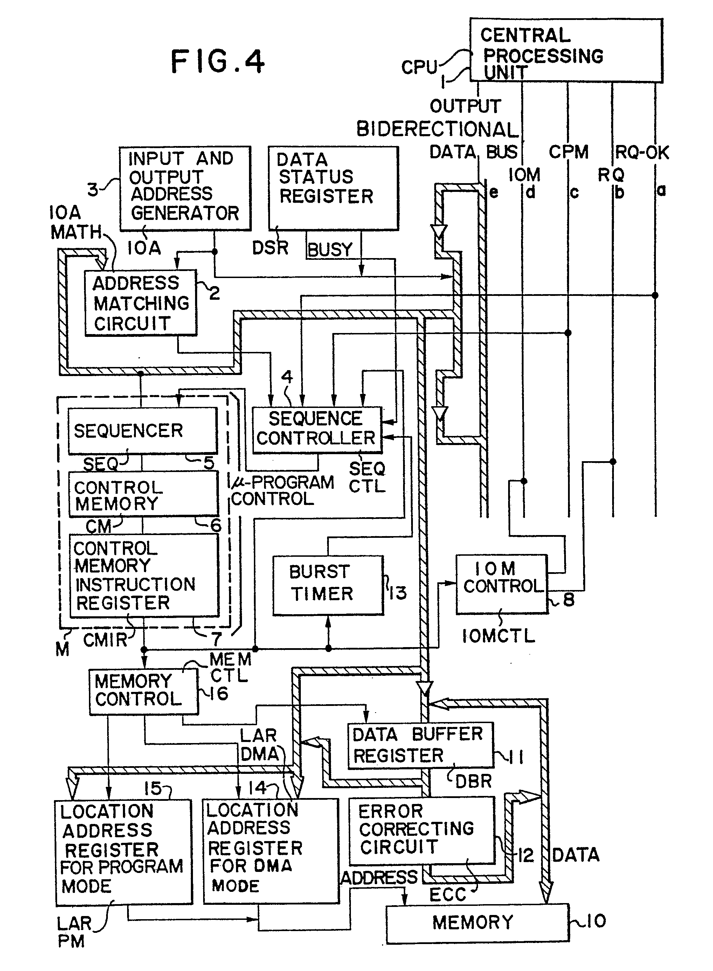

The embodiment of the present invention shown in Fig. 4 differs from the conventional system of Fig. 2 in that a location address register for DMA mode (LAR DMA) 14 and a location address register for program mode (LAR P-M) 15 are provided instead of a location address register 9, and in that they are placed under the control of the microprogram control unit M. The microprogram control unit M provides control signals via a memory control unit (MEM CTL) 16 to the location address registers 14 and 15 and the data buffer register 11.

During data transfer in the DMA mode, the microprogram control unit M applies a control signal to the location address register 14, which designates an address of the memory 10. The memory 10 sends out data held in the designated address to the data buffer register 11. The data buffer register 11 responds to the control signal from the microprogram control unit M to provide such data on the output data bus e except during burst timing as previously described.

On the other hand, in a case in which the CPU 1 requests that the external memory system operating in the DMA mode be restarted in the program mode, an output signal from the input and output address matching circuit 2, which is rejected in the conventional system of Fig. 2, can be accepted in the system of Fig. 4, to enable acceptance of the request from CPU 1. That is, while the data transfer from the external memory system to the (main memory of the) CPU 1 is suspended during burst timing, the microprogram control unit M checks the request from the CPU 1. Having recognized that the request is one for restart in the program mode, the sequence controller 4 accepts it and supplies the microprogram control unit M with a command for operation in the program mode. Upon reception of the command, the microprogram control unit M provides a control signal via the memory control unit 16 to the location address register 15 for program mode use. For example, when writing data in the memory 10 in the program mode, the location address register 15 sets address information for the memory 10 and the data is written in the memory 10 via the data buffer register 11 and the error correcting circuit 12, thus completing a write operation in the program mode while the system is in the DMA mode of operation. Then the external memory system waits for restart by the CPU 1 and the start by the burst timer 13. Upon starting by the burst timer 13 at the end of the burst timing, the microprogram control unit M checks a DMA status signal from the data status register (DSR) and, in the case of the signal being busy, the DMA starting sequence is restored. In this way, execution of the program mode of operation is permitted during burst timing even while DMA processing is being carried out.

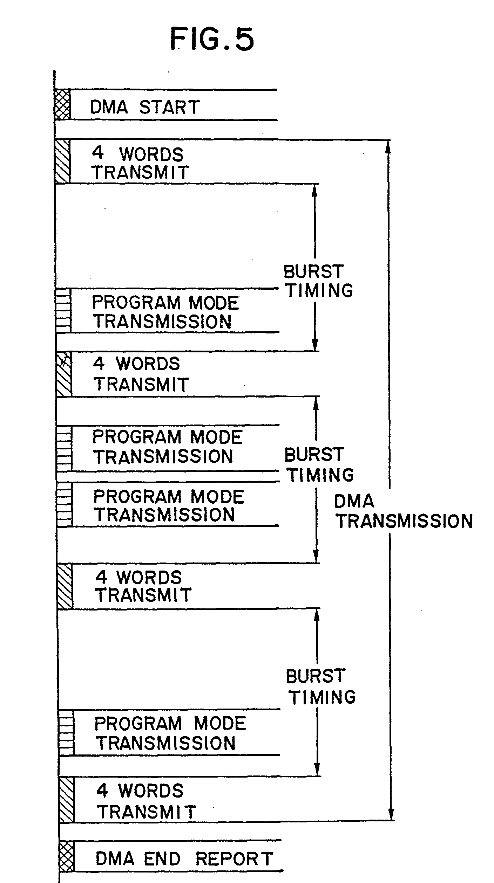

Fig. 5 is a time chart explanatory of data transfer in memory system of Fig. 4. The DMA mode is started by a command from the CPU 1 and DMA transfer is performed in accordance with an address loaded in the location address register 14 for DMA mode. In the example of Fig. 5, DMA transfer is effected in steps of four words and burst timing is provided in the intervals between the respective transfer operation steps.

In the event that the CPU 1 requests the start of program mode during burst timing, data transfer in the program mode is performed in accordance with an address loaded in the location address register 15 for program mode. At the end of the program mode, the DMA status signal is checked and, if it is busy, the DMA operation is resumed. Upon completion of the DMA transfer of a required quantity of data, a DMA end report is applied to the CPU 1.

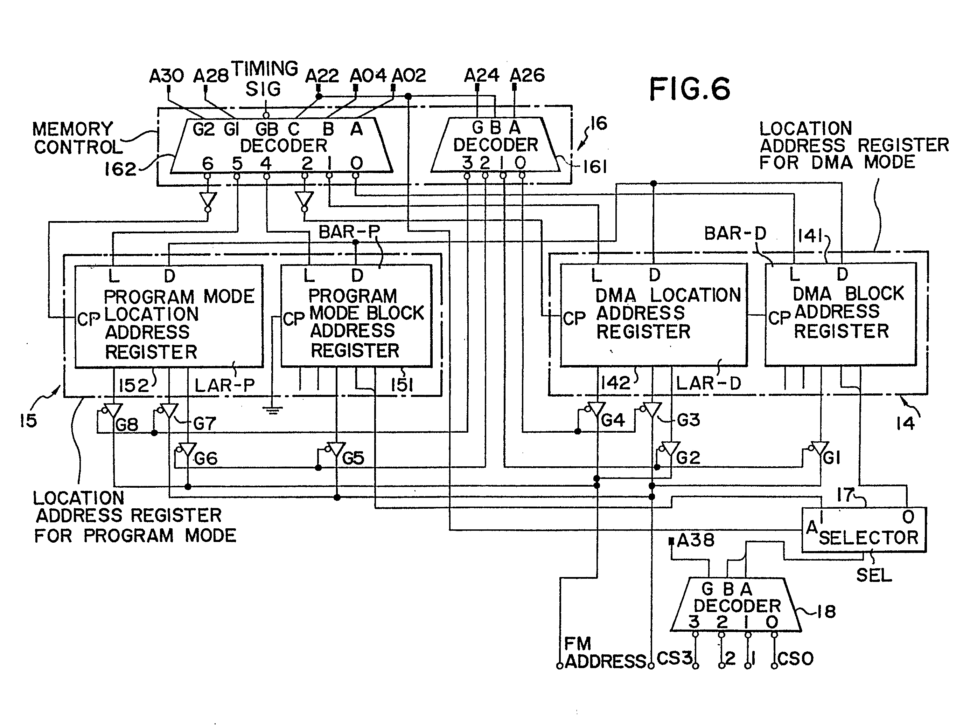

Fig. 6 illustrates, by way of example, a specific arrangement of the location address registers 14 and 15, for DMA mode and program mode, and the memory control unit 16.

The memory control unit 16 is composed of decoders 161 and 162 and responds to signals (A02 to A30) from the microprogram control unit M to selectively activate the location address registers 14 and 15.

In DMA mode, the location address register 14 is selected. The location address register 14 comprises a DMA block address register (BAR-D) 141 and a DMA location address register (LAR-D) 142. The DMA block address register 141 stores and outputs a block address in the memory 10 and the DMA location address register 142 stores and outputs a location address in the memory 10. An initial value of an address, and data concerning a number of words to be transferred, are applied via a data bus from the CPU 1 to a D terminal of each of the DMA block address register 141 and the DMA location address register 142 and a load signal is provided at an L terminal of each of those registers from the decoder 162, whereby block and the location addresses are stored in the registers 141 and 142, respectively. When an address for DMA transfer is to be provided to external memory (e.g. a file memory FM—see Fig. 1) transfer gates $G_1$ and $G_2$ are opened first, through which the block address and high-order bits of the location address are sent out from the registers 141 and 142, respectively, and then gates $G_3$ and $G_4$ are opened to send out therethrough low-order bits of the location address from the register 142. Thus, the address is output in two stages on a time shared basis. Upon each transfer of one word, an increment signal is applied from the decoder 162 to a CP terminal of the DMA location address register 142 to add "1" to its address. When this results in generation of a "carry" from register 142, the carry signal is provided as an increment signal to a CP terminal of the DMA block address register 141 to add "1" to its address. In this way, by one addressing from the CPU 1, addresses are sequentially output corresponding to data of a specified number of words starting with the initial value of the address. A portion of the output from the DMA block address register 141 is applied via a selector 17 to a decoder 18, wherein it is decoded into a chip select signal, which is provided to the file memory for chip selection therein.

In program mode, the location address register 15 for program mode is selected. The location address register 15 comprises a program mode block address register (BAR-P) 151 and a program mode location address register (LAR-P) 152. The program mode block address register 151 stores and outputs a block address in the memory 10 and the program mode location address register 152 stores and outputs a location address in the memory 10. In the case of data transfer in the program mode, addressing by the CPU 1 is effected for each word and address data is applied via a data bus to a D terminal of each of the registers 151 and 152, wherein it is stored by a load signal which is provided to an L terminal of each register. To provide an address to the file memory, gates $G_5$ and $G_6$ are opened first to provide therethrough the block address and high-order bits of the location address from the registers 151 and 152, respectively, and then gates $G_7$ and $G_8$ are opened to send out therethrough low-order bits of the location address from the register 152. In this way, the address is provided in two stages. An increment signal is applied to a CP terminal of the register 152 to add "1" to its address at the time of the second stage. As is the case with the DMA location address register 14, chip selection in the file memory is accomplished by the high-order bits of the block address from the programme mode block address register 151.

## Claims

1. A memory system, connected to a central processing unit (CPU) which includes a main memory (MM), which system has a program mode in which read/write operations in respect of a system memory (FM, 10) of the memory system are controlled by the central processing unit (CPU), and a direct memory access mode for direct transfer between the system memory (FM, 10) and the main memory (MM), the memory system comprising

a microprogram control unit;

timing means (13), operatively connected to the microprogram control unit (M) for indicating burst timings during operation of the system in the direct memory access mode, at which timings the central processing unit (CPU) can execute processing;

location address register means (14, 15), operatively connected to the microprogram control unit (M), the central processing unit (CPU), and the system memory (FM, 10), for storing address information for accessing the system memory (FM, 10) in the direct memory access mode and in the program control mode;

characterised in that the location address register means (14, 15) comprise:—

a first location address register (14), operatively connected to the microprogram control unit (M), the central processing unit (CPU) and the system memory (FM, 10), for storing address information for accessing the system memory (FM, 10) in the direct memory access mode; and

a second location address register (15), operatively connected to the microprogram control unit (M), the central processing unit (CPU) and the system memory (FM, 10), for storing address information for accessing the system memory (FM, 10), operable during such burst timings for read/write operation of the system memory (FM, 10) under control of the microprogram control unit (m) in response to a request from the central processing unit (CPU), whereby program mode access to the system memory (FM, 10) can be effected during execution of a direct memory access mode.

2. A memory system as claimed in claim 1, wherein the first (14) and second (15) location address registers are operatively connected to the microprogram control unit (M) via a memory control unit (MEM CTL) which, in dependence upon the operation of the timing means (13), switches between those registers (14, 15) as regards the provision of address information for accessing the system memory (FM, 10).

3. A memory system as claimed in claim 2, wherein the memory control unit (MEM CTL) comprises decoders (161, 162), responsive to signals (A02 to A30) from the microprogram control unit (M), operable to activate selectively the first (14) and second (156) location address registers for access to the system memory (FM, 10).

4. A memory system as claimed in claim 1, 2 or 3, wherein at least one of the first (14) and second (15) location address registers, comprises:—

a block address register (BAR-D; BAR-P), storing a block address, and a further register (LAR-D; LAR-P), storing high and low order bits of a location address, both operatively connected to the microprogram control unit (M), the central processing unit (CPU) and the system memory (FM, 10), and

wherein the system further includes

first ($G_1$; $G_5$) and second ($G_2$; $G_6$) gate means, operatively connected to the block address register (BAR-D; BAR-P), the further register (LAR-D; LAR-P), and the system memory (FM, 10), for providing a block address and high order bits of the location address for accessing the system memory (FM, 10), and

third ($G_3$; $G_7$) and fourth ($G_4$; $G_8$) gate means, operatively connected to the further register (LAR-D; LAR-P) and the system memory (FM, 10), for providing low-order bits of the location address for accessing the system memory (FM, 10).

5. A memory system as claimed in claim 4, wherein the first ($G_1$; $G_5$) and second ($G_2$; $G_6$) gate means together and the third ($G_3$; $G_7$) and fourth ($G_4$; $G_8$) gate means together are arranged to open in succession to deliver memory address information from those gate means in time sharing fashion.

**Revendications**

1. Système à mémoire, connecté à une unité centrale de traitement (CPU) qui inclut une mémoire principale (MM), système qui a un mode programme dans lequel les opérations de lecture/écriture concernant une mémoire (FM, 10) du système à mémoire sont commandées par l'unité centrale de traitement (CPU), ainsi qu'on mode d'accès direct en mémoire pour un transfert direct entre la mémoire du système (FM, 10) et la mémoire principale (MM), le système à mémoire comportant

une unité de commande à microprogramme;

des moyens de définition de périodes de "rafales" (13), connectés opérationnellement à l'unité de commande à microprogramme (M) pour indiquer des périodes de passage de "rafales" pendant que le système opère en mode d'accès direct en mémoire, périodes pendant lesquelles l'unité centrale de traitement (CPU) peut exécuter le traitement;

des moyens du type registre d'adresses de position (14, 15), connectés opérationnellement à l'unité de commande à microprogramme (M), à l'unité centrale de traitement (CPU) et à la mémoire du système (FM, 10) pour mémoriser l'information concernant l'adresse pour accéder à la mémoire du système (FM, 10) en mode accès direct en mémore et en mode commande per le programme;

caractérisé en ce que les moyens du type register d'adresses de positions (14, 15) comportent:

un premier registre d'adresses de positions (14), connecté opérationnellement à l'unité de commande à microprogramme (M), à l'unité centrale de traitement (CPU) et à la mémoire du système (FM, 10) pour mémoriser l'information concernant l'adresse pour accéder à la mémoire du système (FM, 10) en mode accès direct en mémoire; et

un second registre d'adresses de positions (15), connecté opérationnellement à l'unité de commande à microprogramme (M), à l'unité centrale de traitement CPU) et à la mémoire du système (FM, 10) qour mémoriser l'information concernant l'adresse pour accéder á la mémoire du système (FM, 10), pouvant opérer pendant ces périodes de passage de "rafales" pour une opération de lecture/écriture de la mémoire du système (FM, 10) sous la commande de l'unité de commande à microprogramme (M) en réponse à une demande provenant de l'unité centrale de traitement (CPU), ce par quoi l'accès à la mémoire du système (FM, 10) en mode programme peut se faire pendant l'exécution d'un mode accès direct en mémoire.

2. Système à mémoire comme revendiqué dans la revendication 2, où le premier d'adresses de positions (14) et le second registre d'adresses de positions (15) sont connectés opérationnellement à l'unité de commande à microprogramme (M) par l'intermédiaire d'une unité de commande de mémoire (MEM CTL) qui, en fonction de l'opération des moyens de définition de périodes de rafales (13), commute entre ces registres (14, 15) en ce que concerne la fourniture de l'information concernant l'adresse pour accéder à la mémoire du système (FM, 10).

3. Système à mémoire comme revendiqué dans la revendication 2, où l'unité de commande de mémoire (MEM CTL) comporte des décodeurs (161, 162) sensible aux signaux (A02 à A30) provenant de l'unité de commande à microprogramme (M), pouvant opérer pour activer sélectivement le premier registre d'adresses de positions (14) et le second registre d'adresses de positions (156) pour accéder à la mémoire du système (FM, 10).

4. Système à mémoire comme revendiqué dans les revendications 1, 2 ou 3, où au moins un du premier registre d'adresses de positions (14) et du second registre d'adresses de positions (15) comporte:

un registre d'adresses de blocs (BAR-D; BAR-P), mémorisant une adresse de bloc et un autre registre (LAR-D; LAR-P), mémorisant les éléments binaires de poids fort et faible d'une adresse de position, l'un et l'autre connectés opérationnellement à l'unité de commande à microprogramme (M), à l'unité centrale de traitement (CPU) et à la mémoire du système (FM, 10),

et où le système inclut en outre

des premiers moyens formant porte (G₁ G₅) et des seconds moyens formant porte (G₂; G₆), connectés opérationnellement aux registres d'adresses de blocks (BAR-D; BAR-P), à l'autre registre (LAR-D; LAR-P), et à la mémoire du système (FM, 10) pour fournir une adresse de block et les éléments binaires de poids fort de l'adresse de position pour accéder à la mémoire du système (FM, 10) et

des troisièmes moyens formant porte (G₃; G₇) et des quatrièmes moyens formant porte (G₄; G₈) connectés opérationnellement à l'autre registre (LAR-D; LAR-P) et à la mémoire du système (FM, 10) pour fournir les éléments binaires de poids faible de l'adresse de position pour accéder à la mémoire du système (FM, 10).

5. Système à mémoire comme revendiqué dans la revendication 4, où les premiers moyens formant porte (G₁; G₂) et les seconds moyens formant porte (G₂; G₆) ensemble et les troisièmes moyens formant porte (G₃; G₇) et les quatrièmes moyens formant porte (G₄; G₈) ensemble sont disposés pour s'ouvrir successivement pour fournir une information concernant l'adresse en mémoire depuis ces moyens formant porte, à la façon d'un temps partagé.

**Patentansprüche**

1. Speichersystem, welches mit einer zentralen, Verarbeitungseinheit (CPU) verbunden ist, einen Hauptspeicher (MM) und einen Programm-Modus hat, in dem Lese/Schreib-Operationen in Bezug auf einen Systemspeicher (FM, 10) des Speichersystems von der Zentraleinheit (CPU) gesteuert werden, und einen direkten Speicherzugriffmodus zur direkten Übertragung zwischen dem Systemspeicher (FM, 10) und dem Hauptspeicher (MM), mit:

einer Mikroprogramm-Steuereinheit;

Zeitsteuereinrichtungen (13), die wirkungsmäßig mit der Mikroprogramm-Steuereinheit (M) verbunden sind, um während des Betriebs des Systems in dem direkten Speicherzugriffmodus Bündelzeitsteuerungen anzuzeigen, bei denen die Zentraleinheit (CPU) die Verarbeitung durchführen kann;

Adressenzuordnungsregistereinrichtungen (14, 15), die wirkungsmäßig mit der Mikroprogramm-Steuereinheit (M), der Zentraleinheit (CPU) und dem Systemspeicher (FM, 10) verbunden sind, um Adresseninformation für den Zugriff zu dem Systemsspeicher (FM, 10) in dem direkten Speicherzugriffmodus und in dem Programmsteuermodus zu speichern;

dadurch gekennzeichnet, daß die Adressenzuordnungsregistereinrichtungen (14, 15) umfassen:—

ein erstes Adressenzuordnungsregister (14), welches wirkungsmäßig mit der Mikroprogramm-Steuereinheit (M), der Zentraleinheit (CPU) und dem Systemspeicher (FM, 10) verbunden ist, um Adresseninformation für den Zugriff zu dem Systemspeicher (FM, 10) in dem direkten Speicherzugriffmodus zu speichern;

ein zweites Adressenzuordnungsregister (15), das wirkungsmäßig mit der Mikroprogramm-Steuereinheit (M), der Zentraleinheit (CPU) und dem Systemspeicher (FM, 10) verbunden ist, um Adresseninformation für den Zugriff zu dem Systemspeicher (FM, 10) zu speichern, das Während solcher Bündelzeitsteuerungen für den Lese/Schreibbetrieb des Systemspeichers (FM, 10) unter der Steuerung der Mikroprogramm-Steuereinheit (m) in Abhängigkeit von einer Anforderung von der Zentraleinheit (CPU) in Betrieb ist, wodurch der Programm-Moduszugriff zu dem Systemspeicher (FM, 10) während der Ausführung eines direkten Speicherzugriffmodus bewirkt werden kann.

2. Speichersystem nach Anspruch 1, bei welchem das erste (14) und das zweite (15) Adressenzuordnungsregister wirkungsmäßig mit der Mikroprogramm-Steuereinheit (M) über eine Speichersteuereinheit (MEM CTL) verbunden sind, welche in Abhängigkeit von dem Betrieb der Zeitsteuereinrichtungen (13), zwischen jenen Registern (14, 15) in Bezug auf die Leiferung von Adresseninformation zum Zugriff zu dem Systemspeicher (FM, 10) schaltet.

3. Speichersystem nach Anspruch 2, bei welchem die Speichersteuereinheit (MEM CTL) Dekoder (161, 162) umfaßt, die auf Signale (A02 bis A30) von der Mikroprogramm-Steuereinheit (M) ansprechen, die betätigt werden können, um selektiv das erste (14) und zweite (15) Adressenzuordnungsregister zum Zugriff zu dem Systemspeicher (FM, 10) zu aktivieren.

4. Speichersystem nach Anspruch 1, 2 oder 3, bei welchem wenigstens das erste (14) oder zweite (15) Adressenzuordnungsregister umfaßt:

ein Blockadressenregister (BAR-D; BAR-P), welches eine Blockadresse speichert, und eine weiteres Register (LAR-D; LAR-P), welches Bits höherer und niedrigerer Ordnung einer Lokalisierungs-Adresse speicher, die beide wirkungsmäßig mit der Mikroprogramm-steuereinheit (M), der Zentraleinheit (CPU) und dem Systemspeicher (FM, 10) verbunden sind, und bei welchem das System ferner umfaßt: erste ($G_1$; $G_5$) und zweite ($G_2$; $G_6$) Verknüpfungsglieder, welche wirkungsmäßig mit dem Blockadressenregister (BAR-D; BAR-P), dem weiteren Register (LAR-D; LAR-P), und dem Systemspeicher (FM, 10) verbunden sind, um eine Blockadresse und Bits höherer Ordnung der Lokalisierungsadresse zum Zugriff zu dem Systemspeicher (FM, 10) zu ermöglichen, und dritte ($G_3$; $G_1$) und vierte ($G_4$; $G_8$) Verknüpfungs

glieder, welche wirkungsmäßig mit dem weiteren Register (LAR-D; LAR-P) und dem Systemsspeicher (FM, 10), verbunden sind, um Bits niedrigerer Ordnung der Lokalisierungs-Adresse für den Zugriff zu dem Systemspeicher (FM, 10) zu liefern.

5. Speichersystem nach Anspruch 4, bei wel-chem die ersten ($G_1$; $G_5$) und die zweiten ($G_2$; $G_6$) Verknüpfungsglieder zusammen und die dritten ($G_3$; $G_7$) und die vierten ($G_4$) Verknüpfungsglieder zusammen so angeordnet sind, daß sie in Sukzession öffnen, um Speicheradresseninformation von diesen Verknüpfungsgliedern im Zeitteilungsbetrieb zu liefern.

# FIG. 1

**#1 SHELF**      **BUS**

CC      MM      FMC

FM

**#0 SHELF**      **BUS**

CENTRAL CONTROL EQIPMENT    MAIN MEMORY    FMC    FILE MEMORY CONTROLLER

CC    CENTRAL PROCESSING UNIT    MM    FM    FILE MEMORY

CPU

EXTERNAL MEMORY

0 055 623

**FIG.2**

# FIG.3

DMA START

4 WORDS TRANSMIT

BURST TIMING

4 WORDS TRANSMIT

BURST TIMING

BUSY

DMA TRANSMISSION

4 WORDS TRANSMIT

BURST TIMING

4 WORDS TRANSMIT

DMA END REPORT

PROGRAM MODE TRANSMISSION

PROGRAM MODE TRANSMISSION

PROGRAM MODE TRANSMISSION

PROGRAM MODE TRANSMISSION

3

# FIG.4

# FIG.5

FIG.6